# EUROPÄISCHE PATENTANMELDUNG

(11) **EP 0 937 893 A2**
(43) Veröffentlichungstag der Anmeldung: **25.08.1999**
(21) Anmeldenummer: 99100991.1
(22) Anmeldetag: 21.01.1999
(51) Int. Cl.: F03D 1/06

(54) **Rotorblatt für Windkraftanlagen**

(30) Priorität: 20.02.1998 DE 19807193
(71) Anmelder: Deutsches Zentrum für Luft- und Raumfahrt e.V., 53175 Bonn (DE)
(72) Erfinder: Psolla-Bress, Hartmut, Dipl.-Ing., 37083 Göttingen (DE); Heddergott, Alfred, Dipl.-Ing., 37133 Friedland (DE); Wedemeyer, Erich, Dr. rer. nat., 37176 Angerstein (DE)
(74) Vertreter: Patentanwälte Rehberg + Hüppe

(57) **Zusammenfassung**

Eine Windkraftanlage (1) in Schnelläuferausführung ist mit einem Turm (2), einer am oberen Ende des Turms (2) angeordneten und um eine horizontal verlaufende Rotationsachse (5) drehbaren Nabe (4) und mit maximal vier sich von der Nabe (4) radial erstreckenden und tangential beabstandeten luftangeströmten Rotorflügeln (8) zur Erzeugung von Auftrieb und daraus resultierender Drehung der Nabe (4) versehen. Dabei weisen die Rotorflügel (8) jeweils ein luftdurchströmtes Gitterprofil (9) zur Erzeugung des Auftriebs auf.

## Beschreibung

Die Erfindung betrifft eine Windkraftanlage in Schnelläuferausführung, mit einem Turm, mit einer am oberen Ende des Turms angeordneten und um eine horizontal verlaufende Rotationsachse drehbaren Nabe und mit maximal vier sich von der Nabe radial erstreckenden und tangential beabstandeten luftangeströmten Rotorflügeln zur Erzeugung von Auftrieb und daraus resultierender Drehung der Nabe. Windkraftanlagen dienen hauptsächlich der Stromerzeugung. Sie finden aber auch Anwendung zum direkten An-trieb von mechanischen, hydraulischen oder pneumatischen Vorrichtungen. Der Energieentzug aus der Luftströmung erfogt dabei durch Verzögerung der Windgeschwindigkeit. Die Rotorflügel werden vom Wind unter einem Anstellwinkel angeströmt, wobei sich an den Rotorflügeln eine Überdruck- und eine Unterdruckseite ausbildet, so daß für die Drehung der Nabe erforderlicher Auftrieb in Richtung der Unterdruckseite entsteht.

Eine Windkraftanlage der eingangs beschriebenen Art ist als GROWIAN (GROß WInd ANlage) aus der Zeitschrift Elektrotechnik, Hr. 6 - 1988, Seite 40, "Windenergienutzung - Eine Übersicht" bekannt. Dabei sind meist zwei gegenüberliegende Rotorflügel vorgesehen, die jeweils ein aerodynamisches Profil aufweisen. GROWIANe werden zu den Schnelläufern gezählt, da ihre Schnellaufzahl lambda = vᵤ : vₗ (vᵤ = Umfangsgeschwindigkeit an der Blattspitze, vₗ = Windgeschwindigkeit vor dem Windkraftrad) zwischen 4 und 10 liegt. Mit Anlagen dieser Art können Leistungsbeiwerte von 40 bis 45 % erzielt werden. Der theoretische maximale Leistungsbeiwert für Windkraftanlagen liegt bei 59,3 %. Beim Betrieb vom GROWIANen muß gewährleistet werden, daß der Anstellwinkel zwischen den Rotorflügeln und der Windrichtung in einem Bereich von 8° bis 12° liegt. Wenn der Anstellwinkel unterhalb von 8° liegt, ist zwar eine gute Anströmung der Flügel sichergestellt, der erzeugte Auftrieb reicht jedoch nicht für den Betrieb der Anlage aus. Bei ca. 12° Anstellwinkel ist der Maximalauftrieb erreicht. Oberhalb dieses Wertes kommt es zu einem Abreißen der Strömung. Die Anlage sollte somit idealerweise im Auftriebsmaximum bei einem konstant zu haltenden Anstellwinkel von 12° betrieben werden. Dies macht es notwendig, eine aufwendige Ausrichtungs- und Regelungseinrichtung vorzusehen, beispielsweise mit Hilfe einer Hydraulik oder elektromotorischer Verstellantriebe. Die Anlagen können erst bei höheren Windgeschwindigkeiten betrieben werden, da der maximale Auftrieb bei nur ca. 12° Anstellwinkel bei niedrigen Windgeschwindigkeiten nicht zur Drehung der Habe ausreicht. Bei hohen Windgeschwindigkeiten wiederum müssen die Anlagen wegen möglicher Flatterschwingungen abgeschaltet werden. All diese Faktoren führen dazu, daß der Regelungsaufwand für die Anlagen sehr hoch ist, was seinen Niederschlag in hohen Investitionsund Betriebskosten findet.

Eine weitere Windkraftanlage ist als Westernrad aus der Zeitschrift Elektrotechnik, Nr. 6 - 1988, Seite 39, "Windenergienutzung - Eine Übersicht" bekannt. Bei einem Westernrad handelt es sich um eine Windkraftanlage in typischer Langsamläuferausführung, bei der die Schnellaufzahl lambda deutlich unterhalb von 4 liegt. Ein Westernrad weist eine vielzahl von Flügeln auf, die sich radial von der Habe erstrecken und tangential mit geringem Abstand Zueinander angeordnet sind. Westernräder werden hauptsächlich zum Pumpen von Wasser verwendet und finden vorwiegend in den USA mit ca. sechs Millionen Einheiten eine starke Verbreitung. Von weiterer Entfernung vermitteln sie den optischen Eindruck eines Rads, was zu der Bezeichnung "Westernrad" führte. Die einzelnen Flügel weisen eine mit einfachen Mitteln kostengünstig herzustellende Geometrie auf. Ihre Steuerung wird mit Hilfe einer einfachen Windfahne realisiert, die für eine an die Windrichtung angepaßte Ausrichtung des Westernrads sorgt. Westernräder weisen aufgrund ihrer Geometrie keine besonders hohe Stabilität auf. Wie alle Langsamläufer weisen sie nur einen geringen Wirkungsgrad von etwa 15 % auf, weshalb sich eine Verwendung zur Erzeugung von Strom und dessen Einspeisung ins Netz nicht anbietet.

Der Erfindung liegt die Aufgabe zugrunde, eine Windkraftanlage in Schnelläuferausführung bereitzustellen, die bei unterschiedlichen Windverhältnissen ohne großen Steuerungsaufwand einsetzbar ist.

Erfindungsgemäß wird dies bei einer Windkraftanlage der eingangs beschriebenen Art dadurch erreicht, daß die Rotorflügel jeweils ein luftdurchströmtes Gitterprofil zur Erzeugung des Auftriebs aufweisen. Die Rotorflügel besitzen eine hohe aerodynamische Wirksamkeit bei Anstellwinkeln zwischen 10° und 50°. Die Erzeugung von ausreichend großem Auftrieb bei derart hohen Anstellwinkeln ist möglich, da die Strömung, die sich aufgrund des Anstellwinkels von der Unterdruckseite der angeströmten Strebe entfernt, in Kontakt mit der Strömung auf der Überdruckseite der nächsten Strebe kommt und von dieser in Richtung der ersten Strebe zurückgelenkt wird. In dieser Weise wird ein Abreißen der Strömung an der angeströmten Strebe durch die benachbarte Strebe auf der Unterdruckseite verhindert. Dadurch ist es möglich, durch Einsatz eines Rotorflügels mit einem Gitterprofil anstelle eines aerodynamisch profilierten Einzelflügels identischer Abmaße den erzeugten Auftrieb auf 300 % und mehr zu erhöhen. Der große Bereich möglicher Anstellwinkel bei einem Gitterprofil von etwa 40° bringt den Vorteil mit sich, daß die Ausrichtung der Rotorflügel relativ zu der Windrichtung nicht exakt eingestellt werden muß. In Gebieten, in denen der Wind vornehmlich aus einer Richtung kommt, ist somit keine Einstellung des Anstellwinkels im Betrieb der Anlage notwendig. Der Einstellwinkel wird lediglich bei der Montage der Anlage gewählt und bleibt dann unverändert. Dies gilt auch für Gebiete, in denen die Abweichung der Windrichtung bei etwa 40° oder darunter liegt, da in diesem Bereich für den Betrieb der Anlage ausreichend Auftrieb erzeugt werden kann. Falls dennoch Einstellbedarf besteht, ist eine sehr einfache Regelung für die Ausrichtung der Rotorflügel gegenüber der Windrichtung ausreichend. Beispielsweise kann hierfür eine einfache und kostengünstige Windfahne verwendet werden. Falls die Anlage im Auftriebsmaximum laufen soll, kann eine bekannte Feinregelung verwendet werden. Die Rotorflügel können in einer leichten Sandwich-Bauweise hergestellt werden, die den Vorteil guter Dämpfungseigenschaften gegenüber Schwingungen mit sich bringt. Bei gleicher Spannweite sind Gitterprofile aufgrund ihrer Geometrie um ein vielfaches leichter und gleichzeitig fester und steifer als aerodynamische Profile. Wegen der geringen Masse, dem daraus resultierenden geringen Losbrechmoment und der hohen aerodynamischen Wirksamkeit kann mit Gitterprofilen schon bei niedrigen Windgeschwindigkeiten Energie gewonnen werden, wodurch eine Anwendung auch in windarmen Gebieten möglich ist. Wegen der hohen Unempfindlichkeit gegen Schwingungen können Gitterpofile aber auch bei hohen Windgeschwindigkeiten, also auch in windstarken Gebieten, eingesetzt werden. Der höhere Strömungswiderstand und der daraus resultierende nominell geringere Wirkungsgrad von Gitterprofilen im Vergleich zu aerodynamischen Profilen wäre beim Einsatz solcher Profile beim Bau von Fluggeräten nachteilig, beim Bau von Windkraftanlagen ist er jedoch unerheblich. Der Widerstand wird Problemlos vom Turm aufgenommen.

Das Gitterprofil kann sich in Bezug auf die Rotationsachse radial erstreckende Längsstreben und sich in Bezug auf die Rotationsachse tangential erstreckende Querstreben aufweisen. Das Gitterprofil kann auch kreisbogenabschnittförmig ausgebildet sein. Dabei dienen stets die Längsstreben zur Erzeugung des Auftriebs. Die Querstreben haben die Funktion, das Gitterprofil zu verstärken.

Die Längsstreben können unter einem Anstellwinkel von 30° ± 5° gegenüber der Rotationsachse angeordnet sein. Vorzugsweise sollte ein Anstellwinkel von 30° gewählt werden, da dieser in der Mitte des möglichen Anstellwinkelbereichs von 10° bis 50° liegt. Ausgehend von einer Windrichtung, die parallel zu der Rotationsachse der Habe verläuft, führt somit eine Abweichung der Windrichtung von ± 20° zu keiner Notwendigkeit der Neuausrichtung der Längsstreben des Gitterprofils oder gar dem Stillstand der Anlage.

Die Anordung der Längsstreben unter dem Anstellwinkel von 30° ± 5° gegenüber der Rotationsachse kann realisiert werden, indem die Längsstreben gegenüber einer Flächennormalen der Haupterstreckungsebene des Gitterprofils in dem Anstellwinkel von 30° ± 5° angeordnet sind. Dies bedeutet, daß die Längsstreben unter dem Anstellwinkel schräg in dem Gitterprofil angeordnet sind. Hierdurch wird eine Voreinstellung des Anstellwinkels erreicht, so daß die Gitterprofile mit den Flächennormalen ihrer Haupterstreckungsebenen parallel zu der Rotationsachse eingebaut und eingestellt werden können, wodurch der Einbau der Gitterprofile sehr einfach ist.

Dabei kann das Gitterprofil Streben aufweisen, die zueinander in einem Winkel von 90° so angeordnet sind, daß gedachte Diagonalen zwischen den Verbindungsstellen der Streben radial und tangential zu der Rotationsachse verlaufen. Diese Kreuz- oder X-Bauweise hat den Vorteil, daß die Streben in beiden Richtungen zur Erzeugung von Auftrieb angeströmt werden.

Alternativ können die Flächennormalen der Haupterstreckungsebene des Gitterprofils in dem Anstellwinkel von 30° ± 5° gegenüber der Rotationsachse verlaufen. Dies bedeutet, daß das Gitterprofil um seine Längsachse um den Anstellwinkel verdreht eingebaut wird. Besonders vorteilhaft ist dabei, daß die Streben ohne Berücksichtigung des Anstellwinkels rechtwinklig in das Gitterprofil eingebaut werden können. Dadurch wird eine einfache und kostengünstige Montage der Gitterprofile gewährleistet. Die Einstellung des Anstellwinkels erfolgt erst später bei der Montage der Rotorflügel an der Nabe.

Das Gitterprofil kann Streben rechteckigen Querschnitts mit abgerundeten Kanten aufweisen. Dies hat den Vorteil, daß die Gitterprofile und insbesondere die Streben einen sehr einfachen Aufbau haben, so daß Teilefertigung und Montage gut automatisierbar und kostengünstig zu realisieren sind.

Das Gitterprofil kann gewölbte Streben aufweisen. Die gewölbten Streben haben den Vorteil, daß ihr Profil eine effizientere Erzeugung von Auftrieb gestattet und größere Anstellwinkel möglich sind.

Das Gitterprofil kann aerodynamisch profilierte Streben aufweisen. Diese aerodynamisch profilierten Streben haben wiederum gegenüber den gewölbten Streben den Vorteil, daß sie noch besser zur Erzeugung von Auftrieb geeignet sind und noch größere Anstellwinkel zulassen.

Die Erfindung wird anhand bevorzugter Ausführungsbeispiele weiter beschrieben und erläutert. Dabei zeigt:
- Fig. 1: eine Vorderansicht einer Windkraftanlage in einer ersten Ausführungsform,
- Fig. 2: eine Seitenansicht der Windkraftanlage gemäß Figur 1,
- Fig. 3: eine Detailansicht eines Gitterprofils der Windkraftanlage gemäß Figur 1,
- Fig. 4: einen Schnitt durch das Gitterprofil der Windkraftanlage gemäß Figur 1 entlang der Linie IV-IV in Fig. 3,
- Fig. 5: eine Figur 4 entsprechende Schnittansicht eines Gitterprofils bei einer alternativen Anordnung von Längsstreben,
- Fig. 6: eine Vorderansicht einer zweiten Ausführungsform der Windkraftanlage,
- Fig. 7: eine Detailansicht eines Gitterprofils der Windkraftanlage gemäß Figur 6,
- Fig. 8: eine Vorderansicht der Windkraftanlage in einer dritten Ausführungsform,
- Fig. 9: eine Detailansicht eines Gitterprofils der Windkraftanlage gemäß Figur 8,
- Fig. 10: eine Vorderansicht einer weiteren Ausführungsform der Windkraftanlage,
- Fig. 11: eine Vorderansicht einer weiteren Ausführungsform der Windkraftanlage,
- Fig. 12: eine Schnittansicht einer aerodynamisch profilierten Strebe eines Gitterprofils,
- Fig. 13: eine Schnittansicht einer gewölbten Strebe eines Gitterprofils, und
- Fig. 14: eine Schnittansicht einer Strebe eines Gitterprofils mit rechteckigem Querschnitt und abgerundeten Kanten.

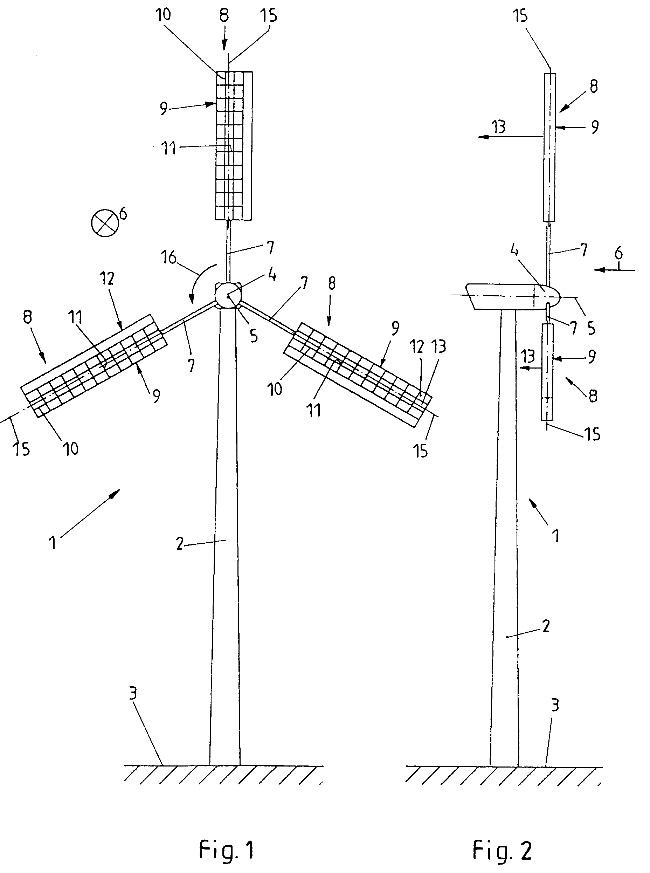

In Fig. 1 ist eine Windkraftanlage 1 dargestellt, die einen Turm 2 aufweist, der mit seinem unteren Ende in dem Boden 3 verankert ist. Am oberen Ende des Turms 2 ist eine Nabe 4 so drehbar angeordnet, daß ihre Rotationsachse 5 horizontal und parallel zu einer Windrichtung 6 verläuft. Von der Nabe 4 erstrecken sich radial drei Träger 7, die tangential beabstandet sind und untereinander einen Winkel von 120° aufweisen. An dem der Nabe 4 abgewandten Ende jedes Trägers 7 ist jeweils ein eine Längsachse 15 aufweisender Rotorflügel 8 angeordnet. Jeder Rotorflügel 8 weist ein Gitterprofil 9 und jedes der Gitterprofile 9 Längsstreben 10 und Querstreben 11 auf. Dabei erstrecken sich die Längsstreben annähernd radial, während die Querstreben tangential zu der Rotationsachse 5 verlaufen. Das Gitterprofil 9 weist eine Haupterstreckungsebene 12 mit einer Flächennormalen auf. Die Flächennormale verläuft parallel zu der Rotationsachse 5. Bei Betrieb der Windkraftanlage 1 trifft der aus der Windrichtung 6 kommende Wind auf die Längsstreben 10 der Gitterprofile 9, die gegenüber der Windrichtung 6 in einem Anstellwinkel angestellt sind, so daß an den Längsstreben 10 jeweils eine Überdruck- und eine Unterdruckseite ausgebildet wird. Die Strömung, die sich aufgrund des Anstellwinkels von der Unterdruckseite der angeströmten Längsstrebe 10 entfernt, kommt in Kontakt mit der Strömung auf der Überdruckseite der nächsten Längsstrebe 10 und von dieser in Richtung der ersten Längsstrebe 10 zurückgelenkt. In dieser Weise wird ein Abreißen der Strömung an der angeströmten Längsstrebe 10 durch die benachbarte Längs-strebe 10 verhindert und Auftrieb in Richtung der Unterdruckseite erzeugt, der zu einer Drehung der Nabe 4 um die Rotationsachse 5 gemäß Drehrichtung 16 führt.

In Fig. 2 ist der obere Rotorflügel 8 in seiner vollen Länge erkennbar, während die beiden anderen Rotorflügel 8 in der Blickrichtung hintereinander liegen und nur verkürzt wahrnehmbar sind. Es ist weiterhin die Flächennormale 13 der Haupterstreckungsrichtung des Gitterprofils 9 zuerkennen, die parallel zu der Rotationsachse 5 der Nabe 4 verläuft.

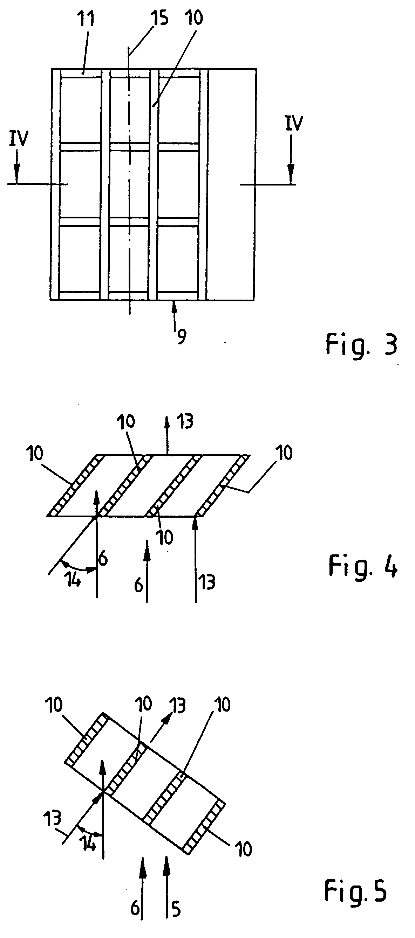

In Fig. 3 ist ein Ausschnitt des Gitterprofils 9 des oberen Rotorflügels 8 dargestellt. Die Längsstreben 10 sind dabei unter dem Anstellwinkel gegenüber der Rotationsachse 5 (Figuren 1 und 2) angeordnet. Dies ist dadurch erkennbar, daß im rechten Bereich der Figur die äußere Längsstrebe 10 von der Seite her betrachtbar ist. Bei den anderen Längsstreben 10 fallen die Hinterkanten der einen Längsstrebe 10 mit den Vorderkanten der jeweils rechts davon angeordneten Längsstrebe 10 zusammen, so daß die Hinterkanten nicht sichtbar sind.

In Fig. 4 ist der Schnitt gemäß IV-IV in Fig. 3 dargestellt. Es ist der Anstellwinkel 14 gegenüber der Windrichtung 6 zu erkennen, wobei die Längsstreben 10 gegenüber der Flächennormalen 13 der Haupterstreckungsebene des Gitterprofils 9 in dem Anstellwinkel 14 angeordnet sind. Das heißt, daß die Längsstreben 10 in dem Gitterprofil 9 bereits bei der Fertigung bzw. Montage mit diesem Anstellwinkel 14 in das Gitterprofil 9 eingesetzt wurden.

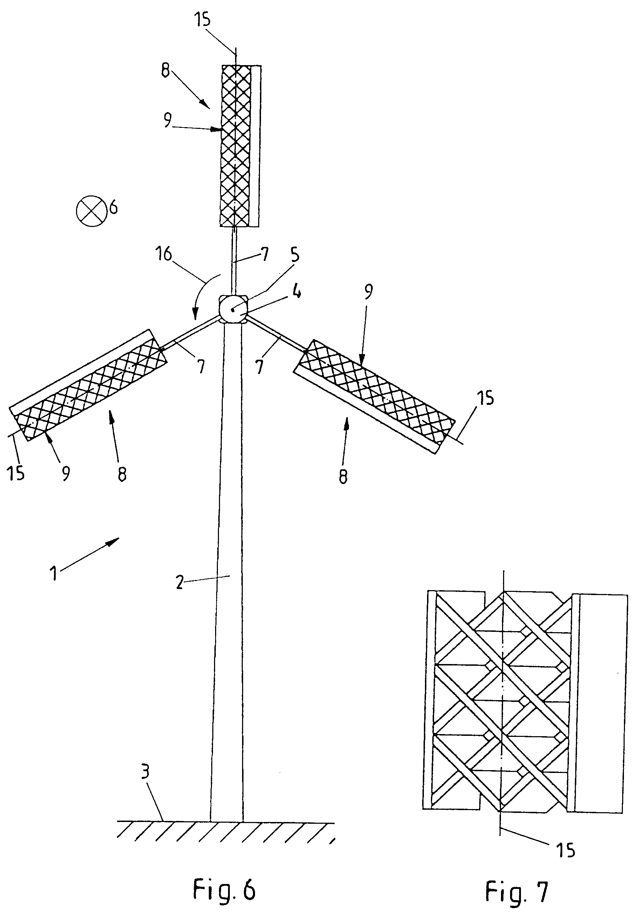

In Fig. 5 ist ein Fig. 4 entsprechender Schnitt dargestellt, wobei hier die Flächennormale 13 der Haupterstreckungsebene des Gitterprofils 9 in dem Anstellwinkel 14 gegenüber der Rotationsachse 5 angeordnet ist. Dies bedeutet, daß der gesamte Rotorflügel mit dem Gitterprofil um die Längsachse zur Realisierung des Anstellwinkels 14 verschwenkt wurde. Der Anstellwinkel 14 ist also nicht bereits bei der Fertigung bzw. Montage der Gitterprofile 9, sondern erst bei der Montage bzw. Einstellung der Rotorflügel an der Nabe berücksichtigt worden.

In Fig. 6 ist die Windkraftanlage 1 mit dem Gitterprofil 9 in einer zweiten Ausführungsform dargestellt. Bei dieser Ausführungsform sind die Streben zueinander in einem Winkel von 90° so angeordnet, daß gedachte Diagonalen zwischen den Verbindungsstellen der Streben radial und tangential zu der Rotationsachse 5 verlaufen.

In Fig. 7 ist ein Teil des um die Längsachse 15 verdrehten Gitterprofils 9 der Winkraftanlage 1 gemäß Figur 6 dargestellt. Das heißt, daß der gesamte Rotorflügel um den Anstellwinkel verdreht eingebaut wurde.

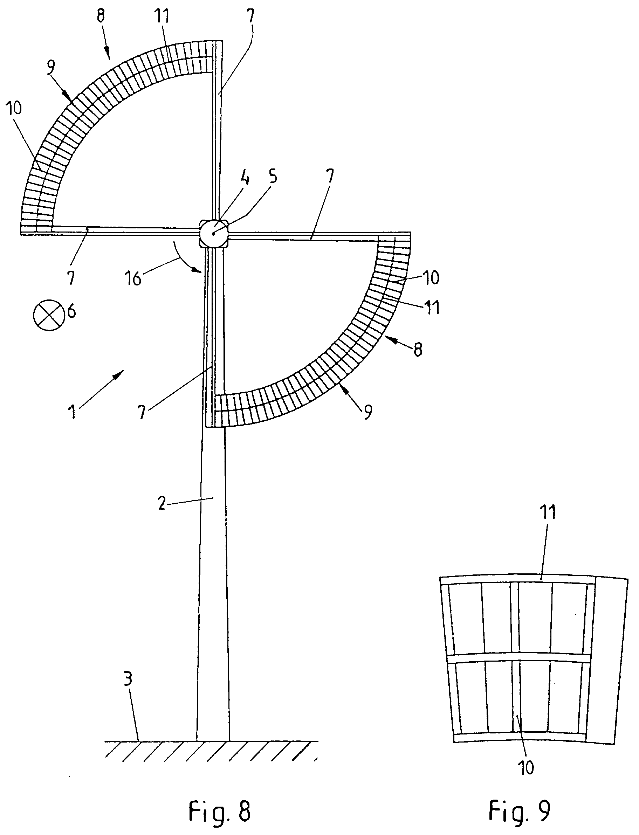

In Fig. 8 ist die Winkraftanlage 1 mit zwei kreisbogenabschnittförmigen Rotorflügeln 8 dargestellt. Dabei verlaufen jeweils die Querstreben 11 zwischen zwei Trägern 7 konzentrisch um die Rotationsachse 5, während sich die Längsstreben 10 radial zu der Rotationsachse 5 erstrecken. Damit weisen alle Auftrieb erzeugenden Längsstreben 10 den gleichen Abstand zu der Rotations-achse 5 auf. Dies hat den Vorteil, daß alle Längsstreben 10 die gleiche Relativgeschwindigkeit gegenüber der Nabe 4 aufweisen.

In Fig. 9 ist die angestellte Anordung der Längsstreben 10 besonders gut erkennbar, da in dieser Ansicht, aufgrund des größeren Abstands zwischen den einzelnen Längsstreben 10, die Vorderkanten und Hinterkanten der Längsstreben 10 nicht zusammenfallen.

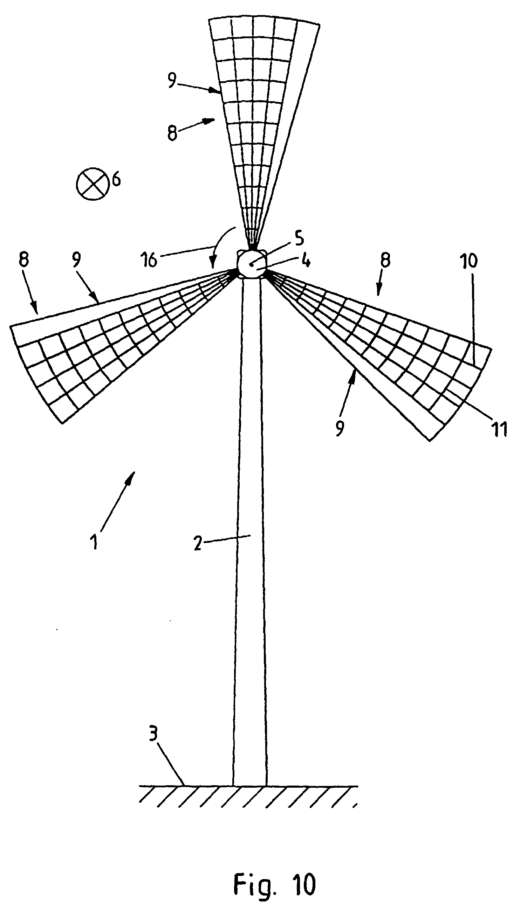

In Fig. 10 ist die Windkraftanlage 1 mit drei fächerförmigen Rotorflügeln 8 dargestellt. Dabei erstrecken sich die Gitterprofile 9 bis hin zu der Nabe 4, d.h., es sind keine Träger vorgesehen. Die Querstreben 11 verlaufen konzentrisch um die Rotationsachse 5 und die Längsstreben 10 radial zu der Rotationsachse 5.

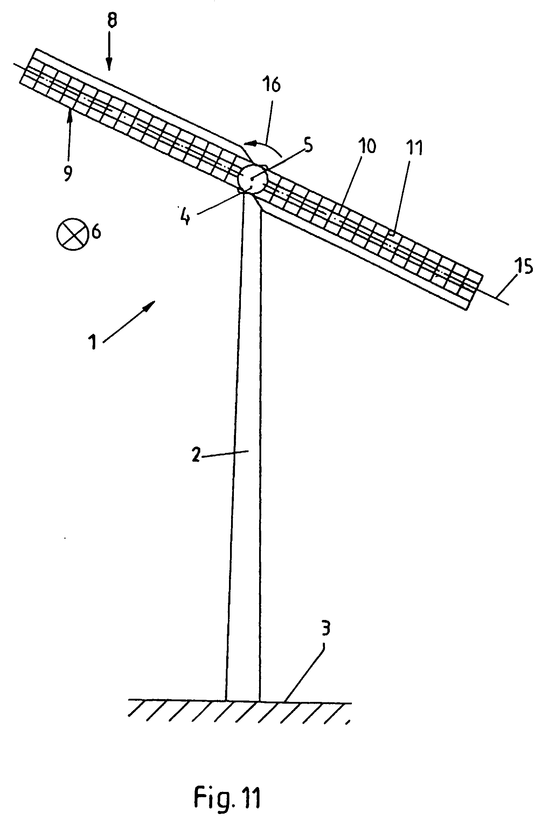

In Fig. 11 ist die Windkraftanlage 1 mit einem durchgängigen rechteckigen Rotorflügel 8 dargestellt.

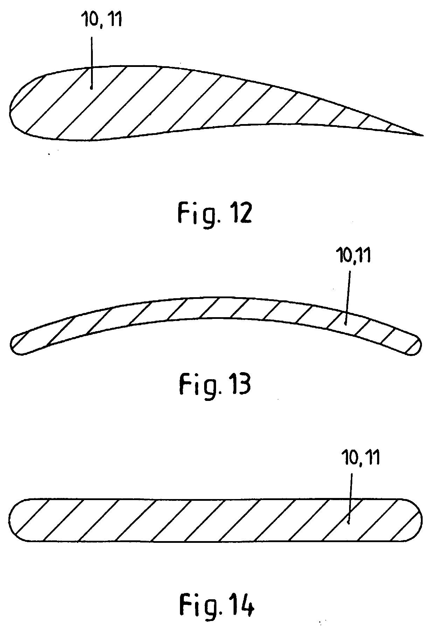

In den Figuren 12 bis 14 sind mögliche Ausführungsformen der Streben 10, 11 dargestellt. Dabei zeigt Fig. 12 aerodynamisch profilierte Streben 10, 11, die besonders gut zur Erzeugung von Auftrieb geeignet sind. Die gewölbten Streben 10, 11 in Fig. 13 sind kostengünstiger herzustellen, weisen aber immer noch gute aerodynamische Eigenschaften auf. In Fig. 14 sind Streben 10, 11 rechteckigen Querschnitts mit abgerundeten Kanten dargestellt, die besonders gut für die Anwendung in einem Gitterprofil geeignet sind, da sie bei ausreichend guten aerodynamischen Eigenschaften besonders einfach und kostengünstig herstellbar sind.

### BEZUGSZEICHENLISTE

- 1 -: Windkraftanlage
- 2 -: Turm
- 3 -: Boden
- 4 -: Nabe
- 5 -: Rotationsachse
- 6 -: Windrichtung
- 7 -: Träger
- 8 -: Rotorflügel
- 9 -: Gitterprofil
- 10 -: Längsstrebe
- 11 -: Querstrebe
- 12 -: Haupterstreckungsebene
- 13 -: Flächennormale
- 14 -: Anstellwinkel
- 15 -: Längsachse
- 16 -: Drehrichtung

## Patentansprüche

1. Windkraftanlage in Schnelläuferausführung, mit einem Turm, mit einer am oberen Ende des Turms angeordneten und um eine horizontal verlaufende Rotationsachse drehbaren Nabe und mit maximal vier sich von der Nabe radial erstreckenden und tangential beabstandeten luftangeströmten Rotorflügeln zur Erzeugung von Auftrieb und daraus resultierender Drehung der Nabe, **dadurch gekennzeichnet,** daß die Rotorflügel (8) jeweils ein luftdurchströmtes Gitterprofil (9) zur Erzeugung des Auftriebs aufweisen.

2. Windkraftanlage nach Anspruch 1, **dadurch gekennzeichnet,** daß das Gitterprofil (9) sich in Bezug auf die Rotationsachse (5) radial erstreckende Längsstreben (10) und sich in Bezug auf die Rotationsachse (5) tangential erstreckende Querstreben (11) aufweist.

3. Windkraftanlage nach Anspruch 2, **dadurch gekennzeichnet,** daß das Gitterprofil (9) kreisbogenabschnittförmig ausgebildet ist.

4. Windkraftanlage nach Anspruch 2 oder 3, **dadurch gekennzeichnet,** daß die Längsstreben (10) unter einem Anstellwinkel (14) von 30° ± 5° gegenüber der Rotationsachse (5) angeordnet sind.

5. Windkraftanlage nach Anspruch 4, **dadurch gekennzeichnet,** daß die Längsstreben (10) gegenüber einer Flächennormalen (13) der Haupterstreckungsebene (12) des Gitterprofils (9) in dem Anstellwinkel (14) von 30° ± 5° angeordnet sind.

6. Windkraftanlage nach Anspruch 1, **dadurch gekennzeichnet,** daß das Gitterprofil (9) Streben (10, 11) aufweist, die zueinander in einem Winkel von 90° so angeordnet sind, daß gedachte Diagonalen zwischen den Verbindungsstellen der Streben (10, 11) radial und tangential zu der Rotationsachse (5) verlaufen.

7. Windkraftanlage nach Anspruch 4, dieser rückbezogen auf Anspruch 2, oder nach Anspruch 6, **dadurch gekennzeichnet,** daß die Flächennormalen (13) der Haupterstreckungsebene (12) des Gitterprofils (9) in dem Anstellwinkel (14) von 30° ± 5° gegenüber der Rotationsachse (5) verlaufen.

8. Windkraftanlage nach einem der Ansprüche 1 bis 7, **dadurch gekennzeichnet,** daß das Gitterprofil (9) Streben (10, 11) rechteckigen Querschnitts mit abgerundeten Kanten aufweist.

9. Windkraftanlage nach einem der Ansprüche 1 bis 7, **dadurch gekennzeichnet,** daß das Gitterprofil (9) gewölbte Streben (10, 11) aufweist.

10. Windkraftanlage nach einem der Ansprüche 1 bis 7, **dadurch gekennzeichnet,** daß das Gitterprofil (9) aerodynamisch profilierte Streben (10, 11) aufweist.
